# EUROPEAN PATENT APPLICATION

(11) **EP 4 682 579 A1**
(43) Date of publication of application: **21.01.2026**
(21) Application number: 24188680.3
(22) Date of filing: 15.07.2024
(51) Int. Cl.: G01S 7/481, G01S 7/4911, G01S 7/4912, G01S 17/34

(54) **SYSTEM AND METHOD FOR MEASURING THE RANGE TO AN OBJECT**

(71) Applicant: Scantinel Photonics GmbH, 89077 Ulm (DE)
(72) Inventor: Malz, André, 80637 München (DE); Mederer, Felix, 89081 Ulm (DE)
(74) Representative: Ostertag & Partner Patentanwälte mbB

(57) **Abstract**

A LiDAR system (14) for measuring a range to an object (12) comprises a first laser (16a) and a second laser (16b) both emitting light having a varying frequency, a free-space coupler (28-1 to 28-4) emitting light into free space, and an optical circuit (17) connecting the first laser (16a) and the second laser (16b) to the free-space coupler (28-1 to 28-4). A control unit (20) controls both the first laser (16a) and the second laser (16b) and/or the optical circuit (17) such that, at any time during a measurement, either the first light or the second light is emitted by the at least one free-space coupler (28-1 to 28-4). This makes it possible to mitigate adverse effects caused by speckle with only a few additional hardware components.

## Description

### BACKGROUND OF THE INVENTION

### 1. Field of the Invention

The invention relates to a system and a method for measuring the range to an object based on FMCW LiDAR technology. Such systems can be used, for example, in autonomously driving vehicles and can be implemented as photonic integrated circuits (PIC) that do not contain any moving parts.

### 2. Description of Related Prior Art

Frequency-modulated continuous wave (FMCW) is a range and relative velocity measuring technology which was originally developed for RADAR applications. If light instead of radio waves are used, this technology is usually referred to as FMCW LiDAR, in which LiDAR is an acronym for "Light Detection And Ranging".

In FMCW LiDAR systems, frequency-modulated light beams scan the environment. A small fraction of the light, which is diffusely reflected at an object, is received and superimposed with a local oscillator wave. Since the reflected light travels a longer path length, the two signals have a frequency difference, which is usually referred to as beat frequency. This beat frequency is measured and used to compute the range ***R*** of the object and the relative velocity ***v*** along the beam direction. By using a tunable laser as light source and a photodiode as detector, the beat frequency can be extracted directly from the photodiode current, because the photodiode delivers a current that is proportional to the squared sum of the two optical waves ("self-mixing effect").

For various reasons, among them eye safety considerations, the intensity of the emitted light beams should not exceed certain values. For diffusely reflecting objects hundreds of meters away, the amount of reflected light reaching the detector is therefore extremely small. In order to obtain reliable measurement results, all effects that have a negative impact on the signal-to-noise ratio (SNR) must be addressed.

One such effect is speckle. Speckle is a phenomenon that occurs when the reflection from the surface of an object illuminated with coherent light is diffuse rather than specular. The light is then scattered in multiple directions, creating an input signal with multiple wavefronts. Since the emitted light beams are coherent, these wavefronts interfere and cause phase and intensity variations. These variations are generally a source of bright and dark spots in the far field image, hence the term "speckle pattern".

For LIDAR systems, speckle is detrimental to the performance as it results in varying amounts of light being coupled back into the LIDAR chip. At the detector level, this can lead to signal fading, which in turn results in increased measurement inaccuracy and even to the inability to make a measurement at a given point. The presence of speckle can reduce the probability of detection (PoD) of the LiDAR system to such an extent that subsequent steps such as object detection and classification cannot be carried out.

The amount of speckle depends on several parameters, including the wavelength of the light, the roughness of the surface, the angle of incidence of the light beams on the surface, the polarization of the light, the distance of the reflecting object from the system, and also path length variations introduced by the atmosphere through which the LIDAR output signal travels.

Various approaches are known in the art to mitigate the problems caused by speckle. All approaches have in common that they aim to obtain multiple measurements and then to combine these measurements. Simply put, if the detected signal is faded in one measurement due to speckle, there is a high probability that fading will not occur in another measurement that is performed under different conditions.

An example of this approach is the LiDAR system disclosed in US 2020/0256956 A1. This system has one or more LIDAR chips that generate multiple LIDAR output signals concurrently and direct them to the same spot on the object in a field of view. The LIDAR output signals have one or more optical diversities selected from a group consisting of wavelength diversity, polarization diversity, and diversity of an angle of incidence of the LIDAR output signal on the object.

US 2019/0025426 A1 discloses an approach in which each pixel is divided into N subpixels. Separate LIDAR measurements are performed for each subpixel, and these measurements are integrated to provide a composite measurement for the pixel. The subpixels are measured sequentially or simultaneously. A single laser is used as a light source.

From US 11,940,571 B2 a LiDAR system is known in which a polarization rotating controller scrambles the state of polarization at a rate faster than the rate of data collection. This mitigates SNR fluctuation due to speckle effects. In an embodiment, two laser sources are combined, allowing a counter-chirp to be generated so that not only range, but also velocity can be measured.

### SUMMARY OF THE INVENTION

The prior art approaches to mitigate the adverse effects of speckle have in common that they require a substantial amount of additional hardware. Although often not explicitly stated, the received light must be split into its different components (for example, states of polarization) before averaging can take place. This considerably increases the complexity of the PIC layout.

Particularly in the case of polarization, there is the further problem that polarization control is often preferred to approximate the function of an optical circulator that is used in systems with a monostatic design to guide the received light towards the detector. This makes it difficult to use polarization control also for speckle reduction.

It is therefor an object of the present invention to provide an FMCW LiDAR based system and a method for measuring the range to an object in which problems associated with speckle are mitigated with less additional hardware compared to prior art solutions.

With regard to the system, this object is achieved by a system for measuring a range to an object comprising a first laser configured to emit first light having a varying frequency, a second laser configured to emit second light having a varying frequency, and at least one free-space coupler configured to emit light into free space. The system further comprises an optical circuit connecting the first laser and the second laser to the at least one free-space coupler, and a control unit configured to control both the first laser and the second laser and/or the optical circuit such that, at any time during a measurement, either the first light or the second light is emitted by the at least one free-space coupler with an intensity that is greater than a threshold intensity. A detector is provided that is configured to detect an interference of a measuring portion of light, which was emitted by the at least one free-space coupler and reflected at the object, and a reference portion of light, which was not reflected at the object, and to produce an electrical signal representing a beat frequency that results from the interference. A computing unit is configured to determine the range to the object based on the electrical signal.

In accordance with the present invention, light signals from two different lasers are directed towards the object. The use of two different lasers ensures that the first light and the second light are statistically independent. Therefore, if in one measurement based on the first light the detected beat signal is faded due to speckle, there is a high probability that fading does not occur or is at least tolerable in a subsequent measurement based on the second light.

Since the first light and the second light are not emitted simultaneously, but successively, the optical circuit connecting the two lasers to the at least one free-space coupler does not need to be substantially modified. In particular, it is not necessary to split the received light, which was reflected from the object, into different components, as this is necessary in prior art systems in which two optical signals are simultaneously directed towards the object.

Two consecutive measurements would take approximately twice as long. In many cases this is not tolerable. However, it can be shown that if the time for each measurement is significantly reduced, the drop in the signal-to-noise ratio (SNR) caused by this reduction is more than compensated by the gain in usable measured values that is obtained by the statistically independent second measurement. Furthermore, in some embodiments it is possible to use the time intervals, which are required to lock a single laser to the desired frequency and cannot be used for measurements, for making measurements with the other laser so that the available time window is better exploited.

If sufficient measurement time is available, even more than two lasers, for example four laser, can be used. Then the adverse effects of speckle can be almost completely suppressed.

The invention is most beneficial if the spots illuminated on the object by the first and the second light are identical. However, often this will not be the case, in particular because there is usually a relative motion between the system and the object, or because the system comprises a moving scan mirror so that light beams emitted successively along the same directions will not impinge exactly on the same spot. However, the invention is also in those cases beneficial in which spots only partially overlap. Therefore, the control unit may be configured to control both the first laser and the second laser and/or optical circuit such that, during a measurement, the first light illuminates a first spot on the object, and the second light illuminates a second spot on the object at a position that at least partially overlaps the first spot. It should be noted that if there is no overlap at all, problems associated with speckle are still mitigated. However, if there is never a spot overlap, the same effect could also achieved with a single laser, as this is known from US 2019/0025426 A1 that has been summarized further above.

In an embodiment, the control unit is configured to control both the first laser and the second laser and/or the optical circuit such that the at least one free-space coupler emits the first light and the second light alternately. This corresponds to a scheme ABABABAB, wherein A represent a measurement based on the first light, and B represents a measurement based on the second light. However, other schemes such as ABBAABBA may also be envisaged. If the two measurements are not carried out immediately one after each other, it may be more difficult to have the measurement spots overlap at least partially.

In embodiments in which each measurement interval associated with a specific direction/pixel is divided in one half, in which the frequency increases (also referred to as up-chirp interval), and another half, in which the frequency decreases (also referred to as down-chirp interval), two measurements are required, namely, one measurement during the up-chirp interval and one measurement during the down-chirp interval. In that case it is preferred that the control unit is configured to control both the first laser and the second laser and/or the optical circuit such that the at least one free-space coupler emits the first light and the second light alternately after each half of the measurement interval. This ensures that the spots illuminated by the first and second light have a maximum overlap. However, in principle it is also possible to change between the first light and the second light after completion of each measurement interval, but then the overlap of the spots may be smaller, as more time has elapsed between the corresponding measurements.

The simplest approach to make the system emit the first light and the second light sequentially would be to directly control both the first and the second laser such that they emit the first and second light only during the desired intervals. However, it turns out that switching on and off suitable tunable lasers with the required frequencies is difficult. Since the lasers must emit light with a very specific frequency modulation, a significant amount of time is needed until a laser starts emitting the desired frequency. Usually, a closed-loop control such as a phase-locked loop is required for this purpose, and such closed-control loops do not instantly produce the desired result.

Therefore, in an embodiment, the optical circuit comprises optical semiconductor amplifiers that are configured to amplify, at any time during a measurement, either the first light or the second light during the measuring interval. Semiconductor amplifiers can be switched on and off very quickly and may be needed anyway for the system to emit light of sufficient intensity. The main advantage of this configuration is that both the first and second laser may be allowed to continuously emit the first light and the second light, i.e. they do not have to be switched on and off successively. While only the first light is amplified, the second light may also be emitted by the system, but at an intensity below the threshold intensity required for detection, and vice versa. Put differently, the system emits the first and the second light continuously, but the optical semiconductor amplifiers amplify, at any time during a measurement, either the first or the second light. The non-amplified light is too weak to produce a beat signal that could be detected by the detector.

If switching is accomplished by optical semiconductor amplifiers, the optical circuit may comprise a passive 3 dB directional coupler that connects the first laser and the second laser to the at least one free-space coupler. This results in a very simple layout of the device.

However, if only one of the two exits of the directional coupler is connected to the at least one free-space coupler, half of the amplified light will be lost. It is therefore preferred if the at least one free-space coupler comprises a first free-space coupler and a second free-space coupler. The directional coupler connects the first laser and the second laser to the first free-space coupler and the second free-space coupler so that, at any time during a measurement, either the first light is emitted simultaneously by the first free-space coupler and the second free-space coupler, or the second light is emitted simultaneously by the first free-space coupler and the second free-space coupler.

Sophisticated FMCW LiDAR systems, for example the system disclosed in EP 4 0 75 192 A1, emit light massively parallel anyway. This means that at a given instant, the light emitted by the laser is split and routed to different free-space couplers so that it is emitted simultaneously along different directions. In such systems, the use of a directional coupler that connects the two lasers with two or more free-space couplers is particularly simple and beneficial.

In other embodiments, switching between the two lasers is not accomplished by optical semiconductor amplifiers. Instead, the optical circuit comprises an active optical switch that connects the first laser and the second laser to the at least one free-space coupler. Such optical switches have a sufficiently high switching frequency and tolerably low insertion losses. Optical semiconductor amplifiers may nevertheless be provided, but are preferably used only for light amplification and not for switching purposes.

The optical switch may be a 2x1 switch. In other embodiments, a 2x2 switch is used. Then the at least one free-space coupler may again comprise a first free-space coupler and a second free-space coupler. The active optical switch connects the first laser and the second laser to the first free-space coupler and the second free-space coupler so that, at any time during a measurement, either the first light is emitted only by the first free-space coupler, or the second light is emitted only by the second free-space coupler.

With regard to the method, the above stated object is achieved by a method for measuring a range to an object using a LiDAR system, wherein the method comprises the following steps:
a) providing a first laser configured to emit first light having a varying frequency;
b) providing a second laser configured to emit second light having a varying frequency;
c) providing an optical circuit configured to connect the first laser and the second laser to at least one free-space coupler configured to emit the first light and the second light into free space;
d) controlling both the first laser and the second laser and/or the optical circuit such that, at any time during a measurement, either the first light or the second light is emitted by the at least one free-space coupler with an intensity that is greater than a threshold intensity, preferably while the first laser continuously emits the first light and the second laser continuously emits the second light;
e) detecting an interference of a measuring portion of light, which was emitted by the at least one free-space coupler and reflected at the object, and a reference portion of light, which was not reflected at the object, and producing an electrical signal representing a beat frequency that results from the interference; and
f) determining the range to the object (12) based on the electrical signal.

With regard to preferred or advantageous embodiments, reference is made to the above remarks relating to the system.

### BRIEF DESCRIPTION OF THE DRAWINGS

Various features and advantages of the present invention may be more readily understood with reference to the following detailed description taken in conjunction with the accompanying drawings in which:
- Figure 1: is a schematic side view of a vehicle approaching an object which is detected by a LiDAR system;
- Figure 2: is a top view of the LiDAR system shown in Figure 1;
- Figure 3: schematically shows the layout of a LiDAR system according to a first embodiment of the invention;
- Figure 4: is a graph showing the time dependency of the frequency of a light source included in the LiDAR system;
- Figure 5: is a schematic meridional section through a scanning unit of the device shown in Figure 3;
- Figure 6: schematically shows the layout of a LiDAR system according to a second embodiment of the invention in which a 2:1 optical switch alternately connects the first and second laser to the scanning unit;
- Figure 7: schematically shows the layout of a LiDAR system according to a third embodiment of the invention in which a 2:2 optical switch alternately connects the first and second laser to two different scanning units; and
- Figure 8: schematically shows the layout of a LiDAR system according to a third embodiment of the invention in which a directional coupler and two optical semiconductor amplifiers are used to guide first or second laser light to the scanning unit.

### DESCRIPTION OF PREFERRED EMBODIMENTS

### 1. Application scenario

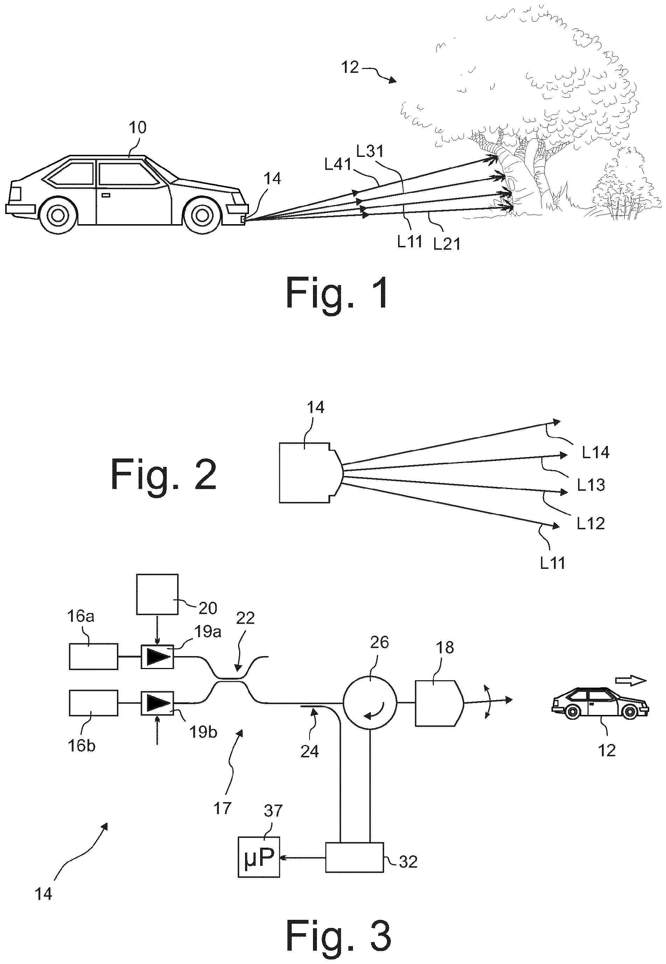

Figure 1 is a schematic side view showing a vehicle 10 that approaches an object 12 represented by a tree. The vehicle 10 has a LiDAR system 14 that scans the environment lying ahead of the vehicle 10 with light beams L11, L21, L31, and L41. From range information associated to each light beam, a three-dimensional image of the environment is computationally reconstructed. In addition, the LiDAR system 14 determines the relative velocity to the object 12 along the direction of the respective light beam L11, L21, L31, and L41. This information is particularly important if the object 12 is not fixed, but moves, too.

The information computed by the LiDAR system 14 about the environment lying ahead of the vehicle 10 may be used, for example, to assist the driver of the vehicle 10 in various ways. For example, warning messages may be generated if a collision of the vehicle 10 with the object 12 threatens. If the vehicle 10 drives autonomously, range and velocity information about the environment lying ahead are required by the algorithms that control the vehicle 10.

As is apparent in Figure 1, the LiDAR system 14 emits the light beams L11 to L41 in different directions in a vertical plane (i.e. the plane of the paper in Figure 1) so that the environment is scanned in the vertical direction. Scanning also takes place simultaneously in the horizontal direction, as Figure 2 illustrates in a top view of the LiDAR system 14. Four light beams L11, L12, L13 and L14 are emitted in a horizontal plane in different directions.

Only for the sake of simplicity it is assumed in Figures 1 and 2 that only four light beams Ln1 to Ln4 are emitted vertically and horizontally. However, in real applications that LiDAR system 14 emits many more light beams. For example, ***k**·*2*ⁿ* light beams are preferred, wherein ***n*** is a natural number which is typically between 7 and 13 and specifies how many beams are emitted in one of ***k*** (horizontal or inclined) planes, wherein ***k*** is a natural number which is typically between 1 and 16.

In more sophisticated systems 14, the light beams shown in Figures 1 and 2 are not emitted sequentially, but at least to some extent in parallel. This significantly increases the amount of range/velocity information that can be obtained per second. An example of such a system is described in EP 3 916 424 A1.

### 2. LiDAR system - first embodiment

Figure 3 schematically shows the layout of the LiDAR system 14 in accordance with a first embodiment of the invention. The LiDAR system 14 comprises a first laser 16a and a second laser 16b. During operation of the LiDAR system 14, each laser 16a, 16b emits light having a frequency ***f**_{chirp}* that periodically varies ("chirps") between a lower frequency ***f**ₗ* and a higher frequency ***fₕ***.

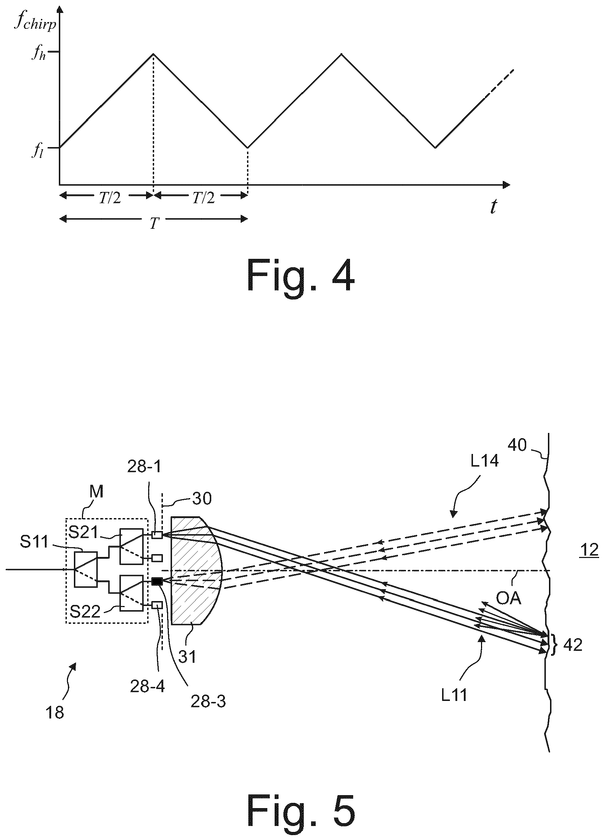

The graph of Figure 4 shows in more detail how the frequency ***f**_{chirp}* of the lasers 16a, 16b varies over time *t* in this embodiment. Each measurement interval having a chirp duration ***T*** is divided into two halves of equal length ***T*/*****2**.* During the first half, the frequency ***f**_{chirp}* increases linearly with a constant and positive up-chirp rate ***r**_{chirp},* i.e. d***f**_{chirp}*/d***t*** = ***r**_{chirp}.* The first half is often referred to as up-chirp interval. During the second half, the frequency ***f**_{chirp}* decreases linearly with a constant negative down-chirp rate *-**r**_{chirp},* i.e. d***f**_{chirp}l*d***t*** = *-**r**_{chirp}.* This results in a triangular wave like frequency variation as shown in Figure 4.

Two measurements, one in the up-chirp and one in the down-chirp interval, double the measurement time for each pixel (pixel correspond to directions), but with the benefit of obtaining additional velocity information.

Referring again to Figure 3, the first laser 16a and the second laser 16b are connected via an optical circuit 17 to at least one free-space coupler that is contained in a scanning unit 18. The optical circuit 17 includes a first optical semiconductor amplifier 19a and a second optical semiconductor amplifier 19b that are both controlled by a control unit 20 so that they can be individually switched on and off according to predetermined switching scheme.

The optical circuit 17 further comprises a 3 dB directional coupler 22. In such a coupler, light entering any one of its input ports is equally distributed (i.e. with a splitting ratio of 50:50) among its two output ports. One of the output ports is connected to a tap 24 at which a small portion of the light, which forms a reference portion (also referred to as local oscillator), is split off.

The main portion of the light is guided from this output port towards an optical circulator 26 that passes the amplified light towards the scanning unit 18. An optical circulator has three ports A, B and C and has the property that light entering one port leaves the next port. Therefore, light entering port A leaves port B, light entering port B leaves port C, and light entering port C leaves port A. The optical circulator 26 may comprise a polarization sensitive beam splitter and a Faraday rotator that is arranged in the optical path upstream the scanning unit 18 so as to rotate the state of polarization by 45°, as this is known in the art as such. Another suitable approach that is also based on polarization control and approximates the function of an optical circulator is described in EP 4 174 539 A1. As will become clear from the following description, the full functionality of an optical circulator is not required.

In the simple system 14 shown in Figure 3, the scanning unit 18 steers a single light beam towards the object 12 - in Figure 3 represented by a moving car - along different directions, as it has been explained above with reference to Figures 1 and 2. Figure 5 shows an exemplary embodiment of the scanning unit 18 in a schematic meridional cross section. Four free-space couplers 28-1 to 28-4 are arranged in the front focal plane 30 of collimating optics 31, which deflect the light outcoupled from the free-space couplers 28-1 to 28-4 so that it is emitted in different directions. As a result of the arrangement in the front focal plane 30, there is an unambiguous relationship between the location of each free-space coupler 28-1 to 28-4 and the emission angle α. If the light is sequentially switched to the free-space couplers 28-1 to 28-4 using optical switches S11, S21, S22 contained in a distribution matrix M, the light collimated by the collimating optics 31 will be directed into various directions with respect to an optical axis OA of the collimating optics 31. This is indicated in Figure 5 for the free-space couplers 28-1 and 28-3 with solid lines (light beam L11) and dashed lines (light beam L13), respectively.

While some part of the light is usually absorbed by the object 12, another part is reflected. As long as the surface 40 of the object 12 is not perfectly smooth, diffuse reflection will occur. This ensures that some light is reflected at the object 12 such that it can propagate back to the scanning unit 18. This light portion is received by the scanning unit 18 and enters - in this embodiment - the same free-space coupler 28-1 to 28-4 from which the light was previously emitted.

Referring again to Figure 3, the reflected light travels through the switching matrix M and reaches the optical circulator 26 that directs the reflected light towards a detector 32. Because of the constantly varying frequency ***f_{chirp}*** of the light emitted by either of the light sources 16a, 16b, the frequencies of the reference light portion, which was split off by the tap 24, and of the light, which has been reflected by the object 12, are slightly different. Consequently, the interference of the reference light and the reflected light results in an optical beat frequency that is detected by the detector 32 which is typically realized as a balanced detector comprising two photodiodes. The electrical signal produced by the detector 32 is fed to a computing unit 37 that computes the range ***R*** to the object and the relative velocity ***ν*** between the LiDAR system 14 and the object 12 based on the detected beat frequencies.

### 3. Speckle

As has been mentioned above, the surface 40 of the object 12 is usually not perfectly smooth so that diffuse reflection occurs. The light is thus scattered in multiple directions, as this is indicated in Figure 5 for one of the impinging light rays constituting the light beam L11. Moreover, the light beam L11 itself has a significant diameter and illuminates a spot 42 on the object 12 that is typically a few millimeters to a few centimeters wide. Since the light emitted from each free-space coupler 28-1 to 28-4 is coherent, the wavefronts associated with the differently reflected light portions interfere and cause phase and intensity variations. At the free-space couplers 28-1 to 28-4, the wavefronts may constructively interfere, for example at free-space coupler 28-1, but with the same probability may destructively interfere, for example at free-space coupler 28-3 shown in black. Whether the interference is constructive or destructive depends on the relative phases of each scattered wavefront. Since the relative phases are usually randomly distributed, the probabilities for partial or complete constructive interference and partial or complete destructive interference are generally identical.

Destructive interference implies that less or no light at all can be received by a free-space coupler 28-1 to 28-4. Since a certain fading can usually be tolerated, not 50%, but significantly more measurement values can be used for the range and velocity measurement. However, in the presence of speckle a certain percentage of beat signals cannot be sufficiently distinguished from noise and must be discarded as invalid. In this context it should be noted that in most FMCW LiDAR systems, one beat signal is obtained during the up-chirp interval and another beat signal is obtained during the down-chirp interval. However, both beat signals are required for determining range and velocity. Consequently, even if one of the two beat signals is invalid, there will be no range or velocity information for this pixel.

In that case the range and velocity images taken from the environment will contain a number of black dots. If the number of black dots is too large, it can be difficult to detect lines and structures and to classify objects.

In order to mitigate this problem, each measurement is performed twice under different conditions. More specifically, and in accordance with the present invention, one measurement (which usually includes detection of two beat signals during the up-chirp and the down-chirp interval, respectively) is performed with the first light emitted by the first laser 16a. Another, and preferably immediately subsequent, measurement (also usually including detection of two beat signals) is performed with the second light emitted by the second laser 16b. The spots 42 successively illuminated on the object 12 during the two measurements are usually not perfectly identical due to a relative movement between the device 14 and the object 12, but they should at least overlap.

Since the first and second light emitted by the two lasers 16a and 16b, respectively, is statistically independent, there is a high probability that if one of the two measurements is invalid, the other one will be valid. Then it is possible to obtain a valid measurement value for each pixel by averaging the two measurement values that have been obtained on the basis of the first and second light, or by discarding the invalid measurement value and using only the valid measurement value.

In the embodiment shown in Figure 3, the two lasers 16a, 16b continuously emit the first light and the second light, respectively. In order to ensure that only the first light or the second light - but not the first and second light simultaneously - is emitted by the scanning unit 18 with a sufficient intensity for signal detection, the optical semiconductor amplifiers 19a, 19b are controlled by the control unit 20 such that at a given time, only one of the two optical semiconductor amplifiers 19a, 19b is in an "on" state in which it amplifies the light emitted by the respective laser 16a, 16b. For example, the optical semiconductor amplifiers 19a, 19b may be alternately operated according to an ABABAB scheme, in which A represent a measurement based on the first light, and B represents a measurement based on the second light. Most optical semiconductor amplifiers 19a, 19b do not pass any light if they are in an "off" state. If this assumption does not apply, there may be still some "wrong" light that is emitted by the scanning unit 18, but the intensity of this light is smaller than a threshold intensity which is required to produce detectable beat signals at the detector 32.

### 4. Further embodiments

In the embodiment shown in Figure 3, one half of the light emitted by the lasers 16a, 16b and amplified by the optical semiconductor amplifiers 19a, 19b is lost in the directional coupler 22.

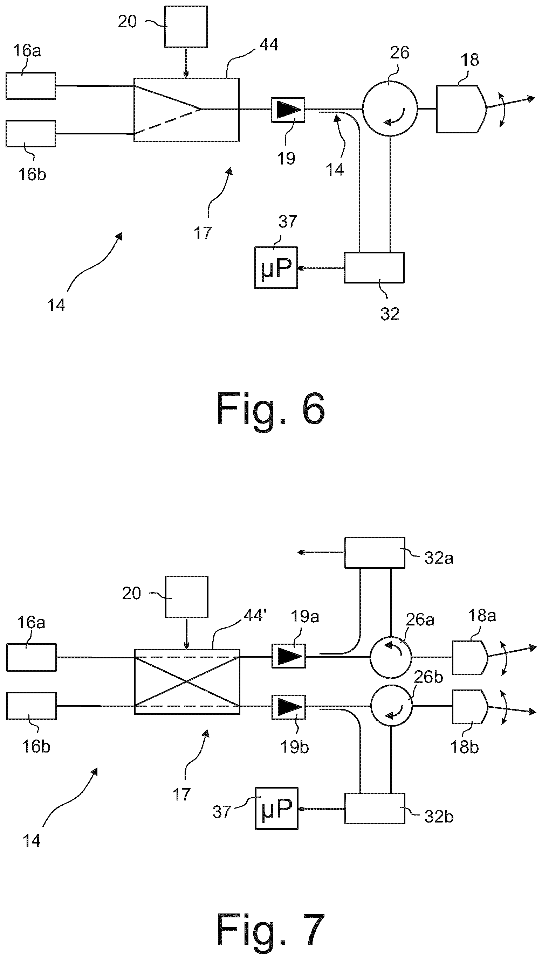

Figure 6 illustrates an embodiment in which the directional coupler 22 is replaced by a 1:2 optical switch 40 that alternately connects the two lasers 16a, 16b with the remainder of the optical circuit 17. The single optical semiconductor amplifier 19 shown in Figure 6 is used here not for switching, but for light amplification, only. Although optical switches with a sufficiently high switching frequency have a significant insertion loss, less light is lost in the optical circuit 17 compared to the embodiment shown in Figure 3.

Figure 7 illustrates a similar embodiment which differs from the embodiment shown in Figure 6 mainly in that the 1:2 optical switch 44 is replaced by a 2:2 optical switch 44' having not only one, but two output ports. In this embodiment, each of the two output ports is connected to the same components as shown in Figure 6 for the single output port of the optical switch 44. Therefore, at any time during a measurement, two light beams, which are generated either by the first laser 16a or the second laser 16, are simultaneously emitted by the two scanning units 18a, 18b. It is also possible (not shown) to combine the two scanning units 18a, 18b into a single scanning unit, but since each emitted light beam requires separate detection, two detectors 32a, 32b will be required. For example, each output of the optical switch 44' may be collected to one or more of the processing units that are described in the above mentioned EP 3 916 424 A1.

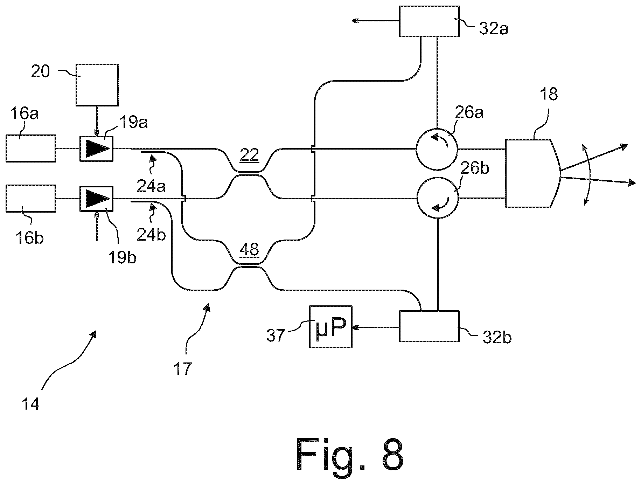

Figure 8 illustrates an embodiment which combines features from the embodiments shown in Figures 3 and 7. In this embodiment, there is again a directional coupler 22 as in the Figure 3 embodiment, but there is no significant light loss because each of the two output ports of the directional coupler 22 is connected to a common scanning unit 18 and detectors 32a, 32b as in the Figure 7 embodiment. An additional directional coupler 48 is provided for distributing the tapped off reference light portion among the detectors 32a, 32b.

The scanning unit 18 now contains not only one switch matrix M as shown in Figure 4, but two such matrices, wherein each matrix is connected to one of the output ports of the directional coupler 22. Consequently, two light beams are emitted simultaneously by the scanning unit 18, as this is indicated in Figure 8.

It is also possible to split the light emerging from each output port of the directional coupler 22 among several optical channels that are defined by independent processing units, as this has been mentioned above with reference to Figure 7 and EP 3 916 424 A1. In each channel the light is guided by a tree-like switch matrix as shown in Figure 4 to one of a plurality of free-space couplers. If there are, for example, 16 channels connected to each output port, there will be 2 x 16 light beams that are emitted simultaneously.

## Claims

1. A LiDAR system (14) for measuring a range to an object (12), comprising:
a first laser (16a) configured to emit first light having a varying frequency,
a second laser (16b) configured to emit second light having a varying frequency,
at least one free-space coupler (28-1 to 28-4) configured to emit light into free space,
an optical circuit (17) connecting the first laser (16a) and the second laser (16b) to the at least one free-space coupler (28-1 to 28-4),
a control unit (20) configured to control both the first laser (16a) and the second laser (16b) and/or the optical circuit (17) such that, at any time during a measurement, either the first light or the second light is emitted by the at least one free-space coupler (28-1 to 28-4) with an intensity that is greater than a threshold intensity;
a detector (32; 32a, 32b) configured to detect an interference of a measuring portion of light, which was emitted by the at least one free-space coupler (28-1 to 28-4) and
reflected at the object (12), and a reference portion of light, which was not reflected at the object (12), and to produce an electrical signal representing a beat frequency that results from the interference, and
a computing unit (37) configured to determine the range to the object (12) based on the electrical signal.

2. The LiDAR system of claim 1, wherein the control unit (20) is configured to control the both the first laser (16a) and the second laser (16b) and/or optical circuit (17) such that, during a measurement, the first light illuminates a first spot (42) on the object (12), and the second light subsequently illuminates a second spot on the object (12) at a position that at least partially overlaps the first spot (42).

3. The LiDAR system of claim 1 or 2, wherein the control unit (20) is configured to control the first laser (16a) and the second laser (16b) and/or the optical circuit (17) such that the at least one free-space coupler (28-1 to 28-4) emits the first light and the second light alternately.

4. The LiDAR system of any of the preceding claims, wherein the optical circuit (17) comprises optical semiconductor amplifiers (19a, 19b) that are configured to amplify, at any time during a measurement, either the first light or the second light.

5. The LiDAR system of claim 4, wherein the optical circuit (17) comprises a passive 3 dB directional coupler (22) that connects the first laser (16a) and the second laser (16b) to the at least one free-space coupler (28-1 to 28-4).

6. The LiDAR system of claim 5, wherein
the at least one free-space coupler (28-1 to 28-4) comprises a first free-space coupler and a second free-space coupler, and wherein
the directional coupler (22) connects the first laser (16a) and the second laser (16b) to the first free-space coupler and the second free-space coupler so that, at any time during a measurement, either the first light is emitted simultaneously by the first free-space coupler and the second free-space coupler, or the second light is emitted simultaneously by the first free-space coupler and the second free-space coupler.

7. The LiDAR system of any claims 1 to 4, wherein the optical circuit (17) comprises an active optical switch (44; 44') that connects the first laser (16a) and the second laser (16b) to the at least one free-space coupler (28-1 to 28-4).

8. The LiDAR system of claim 7, wherein
the at least one free-space coupler (28-1 to 28-4) comprises a first free-space coupler and a second free-space coupler, and wherein
the active optical switch (44') connects the first laser and the second laser to the first free-space coupler and the second free-space coupler so that, at any time during a measurement, either the first light is emitted only by the first free-space coupler or the second light is emitted only by the second free-space coupler.

9. A method for measuring a range to an object (12) using a LiDAR system (14), comprising the following steps:
a) providing a first laser (16a) configured to emit first light having a varying frequency;
b) providing a second laser (16b) configured to emit second light having a varying frequency;
c) providing an optical circuit (17) configured to connect the first laser (16a) and the second laser (16b) to at least one free-space coupler (28-1 to 28-4) configured to emit the first light and the second light into free space;
d) controlling both the first laser (16a) and the second laser (16b) and/or the optical circuit (17) such that, at any time during a measurement, either the first light or the second light is emitted by the at least one free-space coupler (28-1 to 28-4) with an intensity that is greater than a threshold intensity;
e) detecting an interference of a measuring portion of light, which was emitted by the at least one free-space coupler (28-1 to 28-4) and reflected at the object (12), and a reference portion of light, which was not reflected at the object (12), and producing an electrical signal representing a beat frequency that results from the interference; and
f) determining the range to the object (12) based on the electrical signal.

10. The method of claim 9, wherein, during a measurement, the first light illuminates a first spot (42) on the object (12), and the second light subsequently illuminates a second spot on the object (12) that at least partially overlaps the first spot.

11. The method of claim 9 or 10, wherein both the first laser (16a) and the second laser (16b) and/or the optical circuit (17) is controlled such that the at least one free-space coupler (28-1 to 28-4) emits the first light and the second light alternately.

12. The method of any of claims 9 to 11, wherein the optical circuit (17) comprises optical semiconductor amplifiers (19a, 19b) which amplify, at any time during a measurement, either the first light or the second light.

13. The method of claim 12, wherein
the at least one free-space coupler (28-1 to 28-4) comprises a first free-space coupler and a second free-space coupler;
a passive 3 dB directional coupler (22) connects the first laser (16a) and the second laser (16b) to the first free-space coupler and the second free-space coupler so that, at any time during a measurement, either the first light is emitted simultaneously by the first free-space coupler and the second free-space coupler, or the second light is emitted simultaneously by the first free-space coupler and the second free-space coupler.

14. The LiDAR system of any claims 9 to 11, wherein the optical circuit (17) comprises an active optical switch (44; 44') that selectively connects the first laser (16a) or the second laser (16b) to the at least one optical free-space coupler (28-1 to 28-4).

15. The LiDAR system of claim 14, wherein
the at least one free-space coupler (28-1 to 28-4) comprises a first free-space coupler and a second free-space coupler, and wherein
the active optical switch (44') connects the first laser (16a) and the second laser (16b) to the first free-space coupler and the second free-space coupler so that, at any time during a measurement, either the first light is emitted only by the first free-space coupler or the second light is emitted only by the second free-space coupler.
